(19) Europäisches Patentamt

European Patent Office

Office européen des brevets

(11) Veröffentlichungsnummer: **0 436 132 B1**

(12) **EUROPÄISCHE PATENTSCHRIFT**

(45) Veröffentlichungstag der Patentschrift: **06.09.95**

(21) Anmeldenummer: **90123168.8**

(22) Anmeldetag: **04.12.90**

(51) Int. Cl.6: **C08G 75/02**

Die Akte enthält technische Angaben, die nach
dem Eingang der Anmeldung eingereicht wurden
und die nicht in dieser Patentschrift enthalten sind.

(54) Verfahren zur Erniedrigung der Kristallisationstemperatur von Polyarylensulfiden.

(30) Priorität: **15.12.89 DE 3941378**

(43) Veröffentlichungstag der Anmeldung:
**10.07.91 Patentblatt  91/28**

(45) Bekanntmachung des Hinweises auf die
Patenterteilung:
**06.09.95 Patentblatt  95/36**

(84) Benannte Vertragsstaaten:
**BE DE FR GB IT**

(56) Entgegenhaltungen:
**EP-A- 0 129 202
EP-A- 0 229 626
EP-A- 0 259 189
EP-A- 0 279 217
EP-A- 0 339 424**

(73) Patentinhaber: **BAYER AG**

**D-51368 Leverkusen (DE)**

(72) Erfinder: **Wulff, Claus H., Dr.
Richard-Strauss-Strasse 21
W-4150 Krefeld (DE)**
Erfinder: **Dorf, Ernst-Ulrich, Dr.
Bodelschwinghstrasse 16
W-4150 Krefeld (DE)**

**Beschreibung**

Die Erfindung betrifft ein Verfahren zur Erniedrigung der Kristallisationstemperatur von Polyarylensulfiden, vorzugsweise von Polyphenylensulfid.

Polyarylensulfide und ihre Herstellung sind bekannt (z.B. EP-A 171 021).

Polyarylensulfide sind teilkristalline thermoplastischverarbeitbare Polymere mit hoher Wärmeformbeständigkeit. Außerdem sind sie gegenüber Chemikalien sehr beständig.

Für spezielle Anwendungen, beispielsweise wenn eine frühzeitige Verfestigung der Fließfront des geschmolzenen Polymeren beim Ausgießen von Formen vermieden werden soll, ist eine verzögert einsetzende Kristallisation des geschmolzenen Polymeren vorteilhaft.

Es wurde nun gefunden, daß durch bestimmte thermische Behandlung die Kristallisationstemperatur ($T_{mc}$) von bestimmten Polyarylensulfiden (PAS), vorzugsweise speziellem PPS, gezielt erniedrigt werden kann.

Gegenstand der Erfindung ist daher ein Verfahren zur Erniedrigung der Kristallisationstemperatur $T_{mc}$ von Polyarylensulfiden, dadurch gekennzeichnet, daß das Polyarylensulfid mehrmals über einen Temperaturbereich von $T_1 = 180$ bis $T_2 = \geq 300°C$ erhitzt wird und für einen Zeitraum von 10 sec bis 30 min bei der Temperatur $T_2$ gehalten wird.

Erfindungsgemäß werden Polyarylensulfide, vorzugsweise Polyphenylensulfid eingesetzt, deren gewichtsgemitteltes Molekulargewicht $M_{w(rel)}$ und deren Schmelzviskosität $\eta_m$ (bestimmt 306°C, Schubspannung $\tau = 100$ Pa) sich verhalten wie:

$$\lg \eta_m = 3,48 \cdot \lg M_w - 14,25 \pm 0,1,$$

vorzugsweise wie

$$\lg \eta_m = 3,48 \cdot \lg M_w - 14,25 \pm 0,05.$$

Erfindungsgemäß einsetzbare Polyarylensulfide sind z.B. aus der EP-A 171 021 bekannt.

Bei der Durchführung des erfindungsgemäßen Verfahrens wird das PAS mit einer beliebigen Geschwindigkeit, vorzugsweise mit einer Geschwindigkeit von $< 40°C/min$ beliebig oft, vorzugsweise zweimal über den Temperaturbereich von $T_1$ bis $T_2$ erhitzt.

Bei der Durchführung können zwischen den einzelnen Aufheizungsvorgängen beliebige Zeiten von wenigen Sekunden bis vielen Wochen und beliebige Temperaturen liegen, die kleiner 180°C sind.

Vorzugsweise werden zwischen zwei Aufheizvorgängen 5 sec bis 4 Stunden liegen.

Die erfindungsgemäßen Aufheizvorgänge (thermische Belastung) können in allen Vorrichtungen durchgeführt werden, die es gestatten, die erfindungsgemäß einzustellenden Temperaturen zu erreichen. Solche Vorrichtungen sind z.B. DSC-Apparaturen, Heizöfen, Heizschränke, Extruder, (Doppel)-Schneckenwellenextruder, Spritzgußmaschinen, Kneter, Heizpfannen, Drehöfen, heizbare Walzen, Heißluftöfen, Kontaktöfen, Faserspinnmaschinen, Folienblas- und -walzgeräte, Kalander, Preßwerkzeuge, Strahlungsöfen, Infrarotstrahler, Mikrowellenstrahler, Plasmageräte, elektromagnetische und mechanische Hitzegeneratoren, Neutronenquellen, u.s.w.

Die thermische Belastung des PAS ist sowohl kontinuierlich als auch diskontinuierlich möglich.

Die nach dem erfindungsgemäßen Verfahren behandelten Polyarylensulfide zeichnen sich durch eine schon bei tieferer Temperatur (ca. 150 - 220°C) einsetzende Kristallisation bei im wesentlichen gleicher Kristallinität und unverändertem Schmelzverhalten aus. Die $T_{mc}$ wird erfindungsgemäß um 10-50°C erniedrigt. Dies erleichtert z.B. die Verarbeitung zu Folien, Fasern und Spritzgußteilen mit langer Fließlänge oder kleinen Querschnitten.

Die erfindungsgemäß behandelten Polyarylensulfide können mit anderen Polymeren, Pigmenten und Füllstoffen, beispielsweise Graphit, Metallpulver, Glaspulver, Quarzmehl, Quarzgut, Glasfasern und Kohlefasern vor, während oder nach der thermischen Behandlung gemischt oder mit den für Polyarylensulfiden üblichen Stabilisatoren oder Entformungsmitteln versetzt werden.

Es wurde die Schmelzviskosität $\eta_m$ der Polymerschmelze (in Pa.s) bei 306°C in Abhängigkeit von der Schubspannung (in Pa) mit Hilfe eines Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron.

Angegeben wird die Schmelzviskosität, die bei einer Schubspannung von $\tau$ = $10^2$ Pa gemessen wird.

Die angegebenen Kristallisationspunkte [$T_{MC}$ in °C] wurden durch DSC (= "differential scanning calorimetry") auf einem kommerziell erhältlichen Meßgerät bei Abkühlraten von 20 K/min gemessen.

Die erfindungsgemäß behandelten Polyarylensulfide besitzen im allgemeinen Schmelzviskositäten von $0{,}1.10^1$ bis $5.10^4$ Pa.s, vorzugsweise $0{,}1.10^1$ bis $1{,}5.10^3$ Pa.s. Sie können direkt durch Extrusion, extrusionsblasen, Spritzgießen oder sonst übliche Verarbeitungstechniken zu Folien, Fasern oder Formkörpern verarbeitet werden. Diese können in üblicher Weise Verwendung finden, z.B. als Automobilteile, Armaturen, Elektroteile, z.B. Schalter, elektronische Tafeln, elektronische Bauteile, chemikalienreistente und verwitterungsstabile Teile und Apparate wie Pumpengehäuse und Pumpenflügelräder, Ätzbadschalen, Dichtungsringe, Teile von Büromaschinen und Fernmeldeeinrichtungen sowie Haushaltsgeräten etc.

Beispiele:

Jeweils ca. 10 mg PPS werden auf einer handelsüblich DSC-Apparatur von Mettler untersucht, Aufheizraten und Ergebnisse zeigt die nachfolgende Tabelle:

| Bsp. | Aufheizrate 1 K/min | Tmcl °C | Aufheizrate 2 K/min | Tmc2 °C | $T_1$ [a) °C |
|---|---|---|---|---|---|
| 1 | 20 | 222 | 5 | 198 | 150 |
| 2 | 20 | 224 | 10 | 201 | 150 |
| 3 | 20 | 224 | 10 | 203 | 150 |
| 4 | 20 | 224 | 10 | 207 | 25 |
| 5 | 20 | 224 | 20 | 203 | 25 |
| 6 | 20 | 225 | 20 | 201 | 25 |
| 7 | 20 | 227 | 40 | 208 | 150 |
| 8 | 20 | 226 | 40 | 206 | 150 |
| 9 | 20 | 229 | 40 | 209 | 25 |

[a) ausgehend von $T_1$ wurde bis auf $T_2$ = 360°C aufgeheizt und 5 Minuten bei $T_2$ gehalten.

**Patentansprüche**

**1.** Verfahren zur Erniedrigung der Kristallisationstemperatur $T_{mc}$ von Polyarylensulfiden, dadurch gekennzeichnet, daß das Polyarylensulfid mehrmals über einen Temperaturbereich von $T_1$ = 180 bis $T_2$ = ≧300°C erhitzt wird und für einen Zeitraum von 10 sec bis 30 min bei der Temperatur $T_2$ gehalten wird und

daß ein Polyarylensulfid eingesetzt wird, dessen gewichtsgemitteltes Molekulargewicht $M_{w(rel)}$ und dessen Schmelzviskosität $\eta_m$ sich verhalten wie:

$$\lg \eta_m = 3{,}48 \cdot \lg M_w - 14{,}25 \pm 0{,}1.$$

**Claims**

**1.** A process for reducing the crystallization temperature $T_{mc}$ of polyarylene sulfides, characterized in that the polyarylene sulfide is repeatedly heated over a temperature range from $T_1$ = 180°C to $T_2$ = ≧ 300°C and is kept at the temperature $T_2$ for 10 seconds to 30 minutes and in that a polyarylene sulfide, of which the weight average molecular weight $M_{w\,(rel)}$ and the melt viscosity $\eta_m$ bear the following relationship to one another:

$$\lg \eta_m = 3.48 \cdot \lg M_w - 14.25 \pm 0.1,$$

is used.

**Revendications**

1. Procédé pour abaisser la température de cristallisation $T_{mc}$ de sulfures de polyraylène caractérisé en ce que l'on chauffe le sulfure de polyarylène à plusieurs reprises dans un intervalle de température allant de $T_1$ = 180 à $T_2 \geq 300\,°C$ et on maintient à la température $T_2$ pendant une durée de 10 s à 30 min, et
en ce que l'on met en oeuvre un sulfure de polyarylène dont le poids moléculaire moyen, moyenne en poids, $M_{w(rel)}$ et la viscosité à l'état fondu $\eta_m$ satisfont à l'équation :

$$\log \eta_m = 3{,}48 \cdot \log M_w - 14{,}25 \pm 0{,}1.$$